# EUROPEAN PATENT APPLICATION

(11) **EP 4 290 191 A1**
(43) Date of publication of application: **13.12.2023**
(21) Application number: 23177430.8
(22) Date of filing: 05.06.2023
(51) Int. Cl.: G01D 11/30, G01K 1/14, G01K 13/02

(54) **SENSOR AND SENSOR ASSEMBLY**

(30) Priority: 07.06.2022 DE 102022114275
(71) Applicant: FTE automotive GmbH, 96106 Ebern (DE)
(72) Inventor: KRAUSE, Michael, 96106 EBERN (DE); GIRBEA, Marcel-Cornel, 96106 EBERN (DE)
(74) Representative: Valeo Powertrain Systems

(57) **Abstract**

A sensor (12) for a fluid duct (38) in a fluid housing (14) has a sensor housing (18), which has an insert part (20) which complements a receiving part (40) of the fluid housing (14), and a sealing element (22), which is arranged on a sealing section (26) of the insert part (20) and is configured to seal off an intermediate space (42) between the sealing section (26) and the receiving part (40) when the insert part (20) is inserted in an insertion direction (Z) into the receiving part (40) in a final assembly position. Here, the insert part (20) has a securing section (30) with a latching groove (32) which is configured for a spring-elastic securing element (16) to be able to engage into the latching groove (32) in the final assembly position in order to fasten the sensor (12) to the fluid housing (14). A sensor assembly (10) having a sensor (12) of this kind is also provided.

## Description

The invention relates to a sensor for a fluid duct in a fluid housing, in particular in hydraulic clutch actuation and brake systems for motor vehicles, having a sensor housing, which has an insert part which complements a receiving part of the fluid housing, and a sealing element, which is arranged on a sealing section of the insert part and is configured to seal off an intermediate space between the sealing section and the receiving part when the insert part is inserted in an insertion direction into the receiving part in a final assembly position. The invention further relates to a sensor assembly having such a sensor.

Sensors and sensor assemblies of this kind are known.

The sensor is used here to determine a property of the fluid in the fluid duct, for example the temperature.

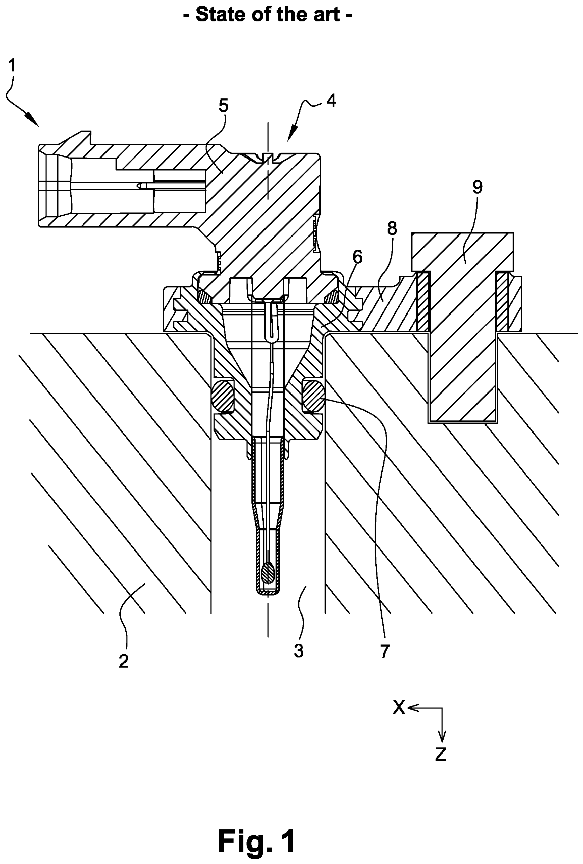

One embodiment of a customary sensor assembly is shown in Figure 1. The sensor assembly 1 has a fluid housing 2 with a fluid duct 3 and has a sensor 4, which has a sensor housing 5 with an insert part 6 and a sealing element 7. In order to mount the sensor 4 on the sensor housing 5, the sensor 4, by way of a pickup-side end, is pushed into the fluid duct 3 in the direction Z and is then fastened to the sensor housing 5 by means of a lateral fastening section 8 using a screw 9.

One disadvantage of known sensor assemblies is that they are voluminous and a great deal of effort is required to assemble them.

The object of the invention is to provide a sensor and a sensor assembly which are of compact design and can be mounted and, respectively, assembled with little effort.

The object is achieved by a sensor for a fluid duct in a fluid housing, in particular for lubrication and cooling in hydraulic systems for motor vehicles, having a sensor housing, which has an insert part which complements a receiving part of the fluid housing, and a sealing element, which is arranged on a sealing section of the insert part and is configured to seal off an intermediate space between the sealing section and the receiving part when the insert part is inserted in an insertion direction into the receiving part in a final assembly position. Here, the insert part has a securing section with a latching groove which is configured for a spring-elastic securing element to be able to engage into the latching groove in the final assembly position in order to fasten the sensor to the fluid housing.

According to the invention, it has been found that the sensor can be of particularly compact design owing to the securing section, which is provided instead of a lateral fastening section for fastening the sensor as is known from the prior art. The latching groove also ensures that the sensor can be mounted on a corresponding fluid housing with little effort.

In one embodiment, the sealing element is arranged between the latching groove and a fluid-side end of the insert part in the insertion direction, as a result of which the fluid duct can be sealed off in a particularly reliable manner by the sealing element. The arrangement also ensures that no fluid comes into contact with the latching groove and the securing element arranged therein, so that the securing element is protected against the fluid, for example against corrosion, and the fluid is protected against contamination by the securing element.

In addition or as an alternative, the securing section can have a maximum outside diameter which is larger than the maximum outside diameter of the sealing section, in particular by at least 25%. In this way, the sensor can be fastened to the fluid housing by means of the securing section in a particularly stable and therefore secure manner while at the same time the sealing section and therefore the associated fluid duct are of particularly compact design.

Provision may also be made for the latching groove to be arranged at a first distance from a fluid-side end of the insert part and for the sealing element to be arranged at a second distance from the fluid-side end of the insert part. Here, the ratio of the first distance to the second distance is greater than 3, in particular greater than 5. This design has the advantage that the latching groove and the sealing element are spatially separated particularly far apart. This ensures that the forces acting in the final assembly position, i.e. when the spring-elastic securing element engages into the latching groove, do not lead to elastic deformation of the insert part, which has an adverse effect on the leaktightness.

In a further embodiment, the sensor housing has a structure which forms a rotation-prevention means with a complementary structure of the fluid housing in the final assembly position. As a result, it is possible to ensure precise orientation of the sensor in relation to the sensor housing.

The structure of the sensor housing can also have a contact area extending in one plane in this case. Here, the plane extends in the insertion direction and in a direction perpendicular to the insertion direction. In this way, the structure forming the rotation-prevention means does not impede the sensor from being inserted in the insertion direction, as a result of which assembly is particularly simple. At the same time, the planar contact area provides a reliable rotation-prevention means.

According to one embodiment, the sensor has a sensor head, which is arranged at a fluid-side end of the insert part or projects beyond the fluid-side end in the insertion direction. Therefore, the position of the sensor head can be varied with little effort, so that the sensor head is always in the correct position relative to the fluid flowing past.

A sensor assembly having a sensor according to the invention and the abovementioned advantages is also provided according to the invention in order to achieve the abovementioned object. The sensor assembly also has a fluid housing, which has a fluid duct and a receiving part designed to complement the insert part, and a spring-elastic securing element, which engages into the latching groove in the final assembly position.

Here, provision may be made for the spring-elastic securing element to be adjusted to a tensioned state when the insert part is inserted in the insertion direction into the receiving part, and to snap into the latching groove when the final assembly position is reached. In this way, the sensor can be fastened to the fluid housing with little effort and without tools. The closure in the form of the spring-elastic securing element and the latching groove is closed here in particular only by inserting the insert part into the receiving part, so that assembly can also be performed with one hand, assuming that the fluid housing is arranged in a correspondingly stable manner.

In addition or as an alternative, the spring-elastic securing element can have a grip using which the securing element can be adjusted, in particular without tools, to a state in which the insert part can be pulled out of the receiving part counter to the insertion direction without being destroyed. Therefore, the sensor can be separated from the fluid housing with little effort and removed without being destroyed.

In one embodiment, the spring-elastic securing element is a spring clip or retaining clip. A standard component of this kind has the advantage that it can be replaced in a cost-effective manner if it becomes damaged or no longer meets the requirements for other reasons. The securing element is also a separate component, as a result of which the closure, in the form of the securing element, the latching groove and the retaining geometry of the fluid housing for the securing element, can be produced with little effort and high quality.

Further advantages and features will become apparent from the following description and from the appended drawings, in which:
- Figure 1 shows a schematic sectional view of a sensor assembly according to the prior art,
- Figure 2 shows a perspective illustration of a sensor assembly according to the invention having a sensor according to the invention and a fluid housing in a final assembly position,
- Figure 3 shows a perspective illustration of the sensor from Figure 2,
- Figure 4 shows a perspective illustration of the fluid housing from Figure 2,
- Figure 5 shows a side view of the sensor assembly from Figure 2, and
- Figure 6 shows a sectional view of the sensor assembly from Figure 2.

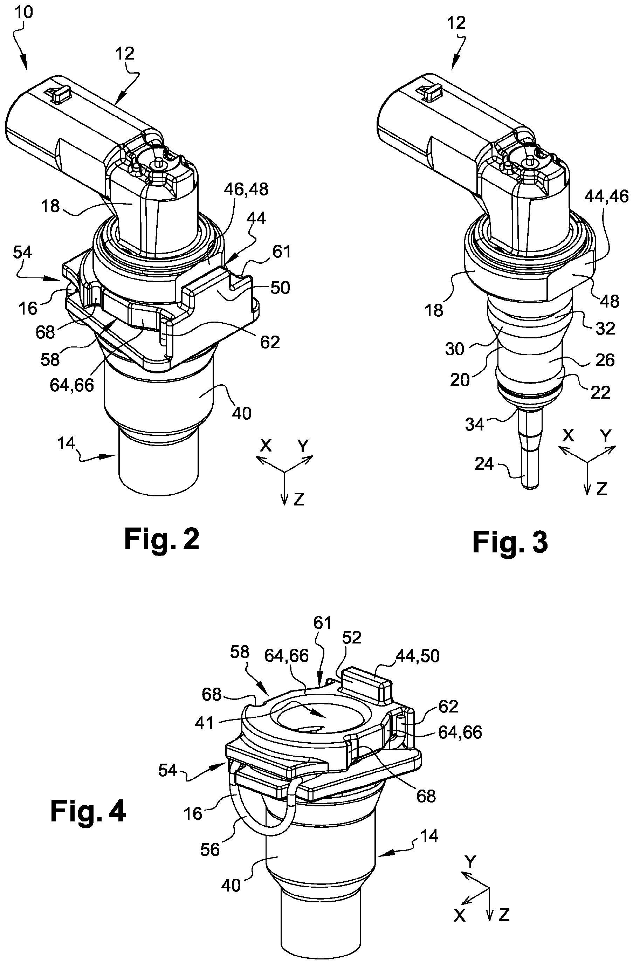

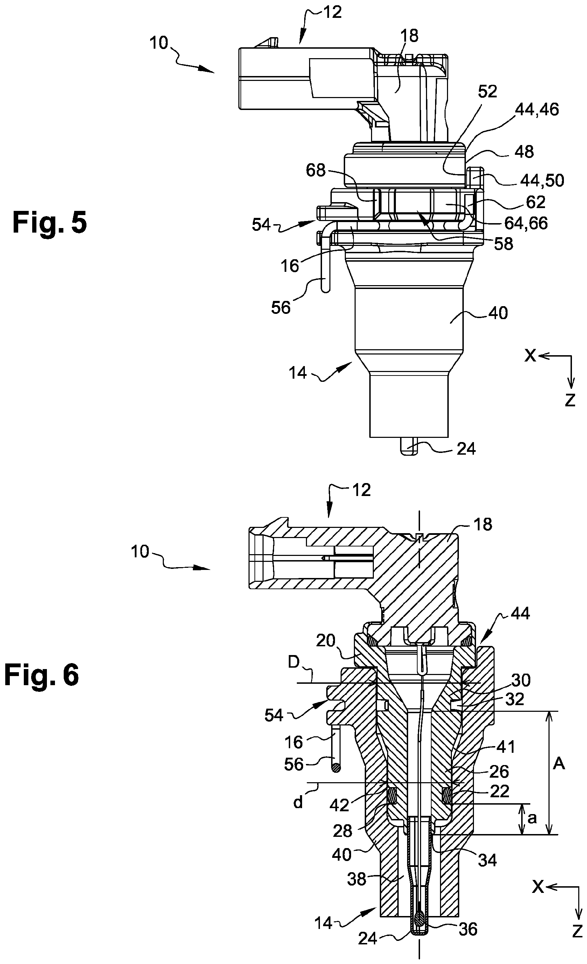

Figure 2 shows a sensor assembly 10 having a sensor 12, a fluid housing 14 and a spring-elastic securing element 16 (also see Figure 5), called securing element 16 for short in the text which follows, in a final assembly position, i.e. in the assembled state.

The sensor 12 has a sensor housing 18 with an insert part 20 (see Figure 3), a sealing element 22 and a sensor head 24.

The insert part 20 has a sealing section 26 with a groove 28 (see figure 6), which runs in an encircling manner in the circumferential direction and in which the sealing element 22 is arranged and in this way is fastened to the insert part 20 with a form fit, and also has a securing section 30 with a latching groove 32 into which the securing element 16 engages in the final assembly position, as is explained below.

The sealing element 22 is an O-ring here.

The latching groove 32 can be designed to be entirely encircling in the circumferential direction or encircling only in sections in the circumferential direction, as long as the securing element 16 can engage into the latching groove 32 in the final assembly position in order to secure or to fasten the sensor 12 to the sensor housing 18.

The sealing section 26 has a maximum outside diameter d which is smaller than a maximum outside diameter D of the securing section 30.

In the present embodiment, the maximum outside diameter D is 30% larger than the maximum outside diameter d.

In an alternative embodiment, the maximum outside diameter D is at least 25% larger than the maximum outside diameter d.

The latching groove 32 is arranged at a first distance A from a fluid-side end 34 of the insert part 20, while the encircling groove 28 or the sealing element 22 is arranged at a second distance a from the fluid-side end 34 of the insert part 20.

The ratio of the first distance A to the second distance a is 4.0 here.

In an alternative embodiment, the ratio of the first distance A to the second distance a is greater than 3.0, in particular greater than 5.0.

The sensor head 24 comprises a pickup 36 which is designed to determine a property of the fluid, for example the temperature.

In the illustrated embodiment, the sensor head 24 extends beyond the fluid-side end 34 of the insert part 20 in the vertical direction Z and into a fluid duct 38 of the fluid housing 14. The fluid duct 38 establishes the connection to a fluid duct which runs at an angle (e.g. 90°) to the fluid duct 38, so that the sensor head 24 lies in the media flow.

In an alternative embodiment, the sensor head 24 is arranged, in particular directly, at the fluid-side end 34 of the insert part 20.

In this context, the fluid housing 14 has a receiving part 40 with a receptacle 41 for the insert part 20, the fluid duct 38 issuing into this receptacle.

At this point, it should be noted that the fluid housing 14 is illustrated in the figures in a form which is limited to what is essential.

In principle, the fluid housing 14 can be designed in any desired manner and in particular extend further in the vertical direction Z in which the fluid duct 38 also runs.

In addition or as an alternative, the fluid housing 14 can be part of a system housing, in particular in a hydraulic clutch actuation and/or brake system for motor vehicles.

Here, the fluid housing 14 is designed in such a way that the sensor 12 can be coupled to the fluid housing 14 by way of the sensor 12 being inserted into the receiving part 40 in the vertical direction Z, with the fluid-side end 34 leading, in a final assembly position in which the securing element 16 is latched into the latching groove 32.

The insertion direction corresponds to the vertical direction Z here.

In this context, the receiving part 40 is designed to complement the insert part 20, so that the insert part 20 is received in the receiving part 40 with a form fit in the final assembly position.

Furthermore, an intermediate space 42 or gap between the sealing section 26 and the receiving part 40 is sealed off in a fluid-tight manner in the final assembly position.

Here, the sealing element 22 is arranged between the latching groove 32 and the fluid-side end 34 in the vertical direction Z.

In order to ensure a defined orientation of the sensor 12 in relation to the fluid housing 14, the sensor assembly 10 has a rotation-prevention means 44 which is formed by a structure 46 (see Figure 3) of the sensor housing 18 with a contact area 48 and a complementary structure 50 (see Figure 4) of the fluid housing 14 with a second contact area 52.

The first contact area 48 and the second contact area 52 each extend in a Y-Z plane and bear flat against one another in the final assembly position.

The fluid housing 14 further has a retaining geometry 54 in which the securing element 16 is received and fastened to the fluid housing 14, so that the final assembly position, in which the securing element 16 engages into the latching groove 32, is well defined.

In the present embodiment, the securing element 16 is a spring clip with a bow-shaped grip 56. The securing element 16 is metallic.

In principle, the securing element 16 can be any desired spring-elastic securing element, for example a retaining clip.

Here, the securing element 16 can be adjusted between a first position (see Figures 2, 4, 5 and 6), in which the securing element 16 projects into the receptacle 41 in such a way that the securing element 16 engages into the latching groove 32 in the final assembly position, and a second position, in which the securing element 16 does not project into the receptacle 41 in such a way that the securing element 16 engages into the latching groove 32 in the final assembly position. Therefore, the securing element 16, in the second position, does not impede the sensor 12 from being pulled out counter to the insertion direction Z.

In order to adjust the securing element 16 from the first position to the second position, the securing element 16 is adjusted in relation to the fluid housing 14 in the direction X, for example by way of the grip 56 being pulled in the direction X.

Here, the fluid housing 14 has a guide geometry 58 against which the securing element 16 bears by means of two guide projections 61, 62 when the securing element 16 is adjusted from the first position to the second position.

Here, the guide geometry 58 is designed with mirror-image symmetry with respect to an X-Z plane and is arranged between the two guide projections 61, 62 in the Y direction.

In this context, the guide geometry 58 has a spreading section 64 with two surfaces 68 which run obliquely to the X direction and at which the guide projections 61, 62 are spread, so that the distance between them in the Y direction increases.

Furthermore, the guide geometry 58 has two stops 68 against which the guide projections 61, 62 can bear in the second position and which prevent the securing element 16 from being able to be pulled away from the fluid housing 14 in the X direction.

Therefore, the securing element 16 is captively fastened to the fluid housing 14.

In order to couple the sensor 12 to the fluid housing 14, the insert part 20 is inserted into the receiving part 40, with the fluid-side end 34 leading, in the insertion direction Z, while the securing element 16 is located in the first position.

In the receptacle 41, the securing element 16 is spread by the insert part 20 and therefore adjusted to a tensioned state, before the securing element 16 finally snaps into the latching groove 32 in the final assembly position, as a result of which the sensor 12 is reliably fastened to the fluid housing 14.

In order to release the sensor 12 from the fluid housing 14, the securing element 16 is adjusted to the second position, as a result of which the securing element 16 no longer engages into the latching groove 32 and the sensor can be pulled out of the receiving part 40 counter to the insertion direction Z.

In this way, a sensor 12 and a sensor assembly 10 are provided, it being possible for the sensor assembly to be assembled and disassembled with little effort.

Furthermore, the sensor 12 and the sensor assembly 10 are of particularly compact construction.

## Claims

1. Sensor (12) for a fluid duct (38) in a fluid housing (14), in particular for lubrication and cooling in hydraulic systems for motor vehicles, having a sensor housing (18), which has an insert part (20) which complements a receiving part (40) of the fluid housing (14), and a sealing element (22), which is arranged on a sealing section (26) of the insert part (20) and is configured to seal off an intermediate space (42) between the sealing section (26) and the receiving part (40) when the insert part (20) is inserted in an insertion direction (Z) into the receiving part (40) in a final assembly position, **characterized in that** the insert part (20) has a securing section (30) with a latching groove (32) which is configured for a spring-elastic securing element (16) to be able to engage into the latching groove (32) in the final assembly position in order to fasten the sensor (12) to the fluid housing (14).

2. Sensor (12) according to claim 1, **characterized in that** the sealing element (22) is arranged between the latching groove (32) and a fluid-side end (34) of the insert part (20) in the insertion direction (Z).

3. Sensor (12) according to claim 1 or 2, **characterized in that** the securing section (30) has a maximum outside diameter (D) which is larger than the maximum outside diameter (d) of the sealing section (26), in particular by at least 25%.

4. Sensor (12) according to one of the preceding claims, **characterized in that** the latching groove (32) is arranged at a first distance (A) from a fluid-side end (34) of the insert part (20) and the sealing element (22) is arranged at a second distance (a) from the fluid-side end (34) of the insert part (20), wherein the ratio of the first distance (A) to the second distance (a) is greater than 3, in particular greater than 5.

5. Sensor (12) according to one of the preceding claims, **characterized in that** the sensor housing (18) has a structure (46) which forms a rotation-prevention means (44) with a complementary structure (50) of the fluid housing (14) in the final assembly position.

6. Sensor (12) according to claim 5, **characterized in that** the structure (50) of the sensor housing (18) has a contact area (52) extending in one plane, wherein the plane extends in the insertion direction (Z) and in a direction (Y) perpendicular to the insertion direction (Z).

7. Sensor (12) according to one of the preceding claims, **characterized in that** the sensor (12) has a sensor head (24), which is arranged at a fluid-side end (34) of the insert part (20) or projects beyond the fluid-side end in the insertion direction (Z).

8. Sensor assembly having a sensor (12) according to one of the preceding claims, a fluid housing (14), which has a fluid duct (38) and a receiving part (40) designed to complement the insert part (20), and a spring-elastic securing element (16), which engages into the latching groove (32) in the final assembly position.

9. Sensor assembly (10) according to claim 8, **characterized in that** the sensor assembly (10) is designed in such a way that the spring-elastic securing element (16) is adjusted to a tensioned state when the insert part (20) is inserted in the insertion direction (Z) into the receiving part (40), and snaps into the latching groove (32) when the final assembly position is reached.

10. Sensor assembly (10) according to claim 8 or 9, **characterized in that** the spring-elastic securing element (16) has a grip (56) using which the securing element (16) can be adjusted, in particular without tools, to a state in which the insert part (20) can be pulled out of the receiving part (40) counter to the insertion direction (Z) without being destroyed.

11. Sensor assembly (10) according to one of claims 8 to 10, **characterized in that** the spring-elastic securing element (16) is a spring clip or retaining clip.
